(19) **Europäisches Patentamt**
**European Patent Office**
**Office européen des brevets**

(11) **EP 2 358 221 B1**

(12) **EUROPEAN PATENT SPECIFICATION**

(45) Date of publication and mention
of the grant of the patent:
**05.09.2012 Bulletin 2012/36**

(51) Int Cl.:
*A23L 1/24* *(2006.01)*    *A23L 1/22* *(2006.01)*
*A23L 1/212* *(2006.01)*    *A23L 1/308* *(2006.01)*

(21) Application number: **09752160.3**

(86) International application number:
**PCT/EP2009/064820**

(22) Date of filing: **09.11.2009**

(87) International publication number:
**WO 2010/060778 (03.06.2010 Gazette 2010/22)**

(54) **PROCESS FOR PREPARING PUREED HERBS, VEGETABLES AND/OR SPICES COMPOSITION**

VERFAHREN ZUR HERSTELLUNG EINER PÜRIERTEN KRÄUTER-, GEMÜSE- UND/ODER GEWÜRZZUSAMMENSETZUNG

PROCÉDÉ D'ÉLABORATION D'UNE COMPOSITION D'HERBES, DE LÉGUMES ET/OU D'ÉPICES RÉDUITS EN PURÉE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **28.11.2008 EP 08170194**

(43) Date of publication of application:
**24.08.2011 Bulletin 2011/34**

(73) Proprietors:
• **Unilever NV**
 **3013 AL Rotterdam (NL)**
 Designated Contracting States:
 **AT BE BG CH CZ DE DK EE ES FI FR GR HR HU IS IT LI LT LU LV MC MK NL NO PL PT RO SE SI SK SM TR**
• **Unilever PLC**
 **London EC4Y 0DY (GB)**
 Designated Contracting States:
 **CY GB IE MT**

(72) Inventor: **MELWITZ, Dieter, W**
**74074 Heilbronn (DE)**

(74) Representative: **van Benthum, Wilhelmus A. J. et al**
**Unilever Patent Group**
**Olivier van Noortlaan 120**
**3133 AT Vlaardingen (NL)**

(56) References cited:
**EP-A- 1 329 164    WO-A-90/05460
WO-A-96/31126    WO-A-2005/039317
WO-A-2007/092383    DD-A1- 220 895
GB-A- 1 570 793    US-A1- 2006 003 081
US-A1- 2006 115 564    US-A1- 2007 172 572**

## Description

### FIELD OF THE INVENTION

The present invention relates to a pureed herbs, vegetables and/or spices composition, more in particular to a water-continuous herbs and/or spices composition comprising insoluble fibres. Moreover, the invention relates to a process for preparing such a pureed herbs, vegetables and/or spices composition.

### BACKGROUND TO THE INVENTION

Nearly every dish that is prepared in a professional kitchen (restaurant, canteen, hospital, etcetera) contains one or more herbs and/or spices. These herbs and/or spices can be used fresh, however fresh herbs have short shelflife and release taste and flavour more slowly or rapidly in the dish depending on the type. Fat-compositions that contain herbs and/or spices are well known, for example from US 4,572,836. However, so far these compositions are only known as pastes, or other non-pourable herbs-dispersions, wherein the fats applied in the paste have high trans-contents. Moreover, these products contain high levels (12%) of cooking salt and other inorganic or organic salts for microbiological keepability and taste boosting effect reasons.

Pesto's and the like are sometimes used to provide herbs to a dish, but these have high oil content which is unsuitable for many dishes. Also taste and flavour profile is often too strong for more delicate dishes. Due to a high caloric content and concentrated taste and flavour composition, the application range of pesto's is limited.

More recently, the consumers favour products having a lower fat content and a more fresh and natural appearance. For stability reasons, industrial products are often acid stabilised. However, acidic water based purees of herbs, vegetables and spices have a limited shelflife and are not microbiologically stable. Moreover, such purees rapidly lose their natural fresh green colour, which renders them less attractive for the consumer.

One of the mechanisms that may lead to loss of colour is heating, which may be required during the preparation of the puree as a preservation step. Preserving herbs by heat treatment or drying may damage the taste and flavour profile, e.g. in dried herbs and/or spices. Also preserving with acid or salt causes damage to the taste and flavour profile. Preservatives such as sorbate are disliked by customers (e-numbers). Treatment to achieve low water activity also adversely affects taste and often also speed of flavour development.

On the other hand, some kind of preservation is often required, as herbs and/or spices may be very dirty after harvest, meaning that they often have a high microbial load. Hence a composition should have a good microbiological stability, and hence should be safe upon use and consumption.

Also dry herbs have the problem of variable speed of taste/flavour development. That makes it difficult to quickly adjust the taste of a dish with the herbs to get the required strength of herbs in the dish. Also herbs cannot be added at the end of the preparation of a hot dish which causes flavour loss. Frozen herbs are also difficult to use: have to decide beforehand how much needed. Keep re-freeze. De-frosting takes time, which is often not available in a professional kitchen, as the chef has to pay attention to many pots and pans, plates, and dishes.

Therefore, there is still a need for purees of herbs, vegetables and/or spices composition, which do not suffer from one or more of the above draw-backs.

US 2006/0003081 A1 discloses fruit-based compositions, especially guacomole made from avocado, that contains citrus fibers. During the preparing of the composition a heating step is applied to pasteurise the composition.

WO 2005/039317 A1 discloses dressings containing up to 23% oil, 0.1-0.5% citrus fiber, and 0.1-7% seasoning.

From WO 94/08470 salad dressings are known, wherein the fat phase can contain a hardened rapeseed oil component. The dressing further can contain up to 4 wt% of a herb or spice. Therefore this document does not provide a solution for systems wherein low levels of oil and fat are present and that contain high amounts of herbs and/or spices.

WO 2007/092383 A2 discloses mayonnaise-like food products and processes for manufacturing mayonnaise-like food products. WO 96/31126 A1 discloses cellulosic materials derived from pulps, for use in food products. DD 220895 A1 discloses food products containing microcrystalline cellulose, to reduce the caloric content of the foods.

GB 1570793 discloses a thickening composition for a salad dressing, comprising microcrystalline cellulose. WO90/05460 discloses emulsion food products including hemicellulose. The hemicellulose is used as a substitute for all or a part of the fat found in conventional food products. US 2006/115564 discloses citrus fiber that is recovered from citrus vesicles to obtain a food additive for beverages, baked goods, meat or meat emulsions, confectionary, jams and jellies, dairy products, dressings, energy bars, and the like.

We have now surprisingly found that water based purees of herbs, vegetables and/or spices compositions can be prepared which overcome one or more of the above mentioned issues, if insoluble fibres are present in the composition.

This leads to a remarkably good taste and flavour profile in a herbs, vegetables and/or spices composition, that is ambient stable and can be kept at ambient temperature for extended periods of time even after opening the packaging. The composition develops its flavour and taste contribution in the final dish almost instantaneously upon addition, and that is not too concentrated or heavy and therefore does not have a high risk of overdosing, thereby affecting the cooked dish, and does not need preservatives which can be regarded by the consumer as artificial or non-natural, such as sorbate, and other compounds having an e-number. The herbs composition can be obtained by a process wherein the temperature of the mixing process does not exceed 50°C, preferably does not exceed 40°C.

## SUMMARY OF THE INVENTION

According to the invention, there is provided a process for preparing a water-continuous herbs, vegetables, and/or spices composition

comprising from 1 % to 60% by weight of one or more herbs, vegetables and/or spices,
from 1 to 10% by weight of insoluble fibres, which are citrus fibres or wheat fibres,
from 1 to 40% by weight of a vegetable oil
and having a pH of 2.0 to 4.0,
comprising the steps of:

   (i) mixing water, food-grade acid, herbs, spices and/or vegetables together in a high shear mixer, which also has a mincing/ chopping or milling function,
   (ii) adding all remaining ingredients and continuing homogenisation,
   (iii) filling the obtained product into a container, preferably under aseptic conditions:

and wherein the temperature does not exceed 50°C.

## DETAILED DESCRIPTION OF THE INVENTION

The present invention relates to a process for preparing a water-continuous herbs, vegetables, and/or spices composition. Herbs are defined in The Illustrated Herbal Handbook by J. de Bairacli Levy, Faber and Faber Ltd., Londen, chapter 3. Spices are defined in 'The Book of Spices', Livingstone Publ. Comp. 1969, p. 3.
A vegetable is a plant that is cultivated for an edible part, such as the root of the beet, the leaf of spinach, or the flower buds of broccoli or cauliflower.
The herbs and spices are preferably used as frozen herbs or spices, containing 10 - 95% by weight of water. Preferred herbs are selected from the group, consisting of sage, rosemary, basil, thyme, oregano, dill, parsley, garlic, onion, shallots, savoury, marjoram, tarragon, lavender, coriander, kafir lime, chervil, bear's garlic, lemon grass, red/ green/yellow pepper, chillies, beet root, ginger, tomato, lemon, star anise and mixtures thereof known as Provencal and Italian, while the spices are selected from the group, consisting of black, green, red and white pepper, nutmeg, mace, curry, curcuma, saffron, clove and mixtures thereof. Another preferred spice is vanilla.
Preferably, the herbs as used in the present invention are green herbs. It is commonly known that green herbs may lose their colour during storage after harvest, and may turn beige or brown. Examples of useful vegetables are onion, paprika.
The size of the raw herbs, spices and/or vegetables prior to the production method, preferably ranges from 0.5 to 25 mm, depending on the raw material used. For example for basil the raw material may range from 0.8 to 5 mm, preferably for taragon it may range from 1 to 20 mm, and for other herbs or vegetables other ranges may be acceptable. The herbs, spices, and/or vegetables are preferably ground to a fine size prior to mixing with other ingredients of the composition while preparing the present compositions. The average size of the herbs, spices, and/or vegetables after grinding and as used in the composition of preferably ranges between 0.01 and 5 millimeter (weight average diameter), more preferably between 0.05 and 4 millimeter, most preferred at maximum 3 millimeter. Preferably the composition has a homogeneous and smooth constitution.
The amount of herbs, vegetables and/or spices in the compositions is 1 to 60% by weight, preferably 3 to 60% by weight, preferably 5 to 60% by weight, preferably 5 to 40% by weight, preferably 7 to 40% by weight. Especially for spices, the amount of spices preferably is between 1 and 40% by weight, preferably between 2 and 25% by weight.
A second element of the composition is the presence of insoluble fibres. By the words 'fibre', we mean any insoluble, particulate structure, wherein the ratio between the length and the diameter ranges from 5 to infinite. 'Insoluble' here means insoluble in water. Here, the diameter means the largest distance of the cross-section. Length and diameter are intended to mean the average length and diameter, as can be determined by (electron) microscopic analysis, atomic force microscopy or light-scattering.
Preferably in the finished food products, the insoluble fibres typically have lengths from about 25 to about 400 microns, and preferably from about 50 to 185 microns, and most preferably, from about 100 to about 165 microns, including all ranges subsumed therein. The widths of such fibres are typically between about 3.0 to about 20.0 microns, and preferably, from about 5.0 to about 10.0 microns.
Insoluble fibres suitable for use in this invention are described for instance in WO 2005/039317 A1. They can be found, for example, in fruits, both citrus and non-citrus. Other sources of the insoluble fibres suitable for use in this invention are vegetables like legumes, and grains. Preferred insoluble fibres suitable for use in this invention can be recovered from tomatoes, peaches, pears, apples, plums, lemons, limes, oranges, grapefruits or mixtures thereof. Other preferred insoluble fibres suitable for use in this invention may be recovered from the hull fibres of peas, oats, barley, mustard, soy, or mixtures thereof. Preferably the insoluble fibres are selected from the group consisting of insoluble fibres made of carbohydrates, such as microcrystalline cellulose, citrus fibres, onion fibres, fibre particles made of wheat bran, lignin and stearic acid fibres. Especially preferred are wheat fibres and/or citrus fibres. Wheat fibres may be derived from different parts of the wheat plant, like the seed, the hull of the seed, or the stem. Still other fibres which may be employed include those that are plant or root-derived as well as those which are wood-derived.

Typically, the compositions comprises from about 0.10 to about 10%, and preferably, from about 0.5 to about 7%, and most preferably, from about 0.5 to about 5% by weight insoluble fibres, based on total weight of the composition. Another preferred level is between 1 and 5% by weight of insoluble fibres. Such insoluble fibres are commercially available from suppliers like J. Rettenmaier and Sohne GmbH under the Vitacel™ name and Herbstreith & Fox under the Herbacel™ name. A preferred type of citrus fibres is Citrus fibre Type N from Herbafoods (Werder (Havel), Germany). Fibres normally are all insoluble.

Alternatively, the fibres can be made of a waxy material. Examples of a suitable source for the waxy material are the food-grade waxes carnauba wax, shellac wax or bee wax. This food-grade waxy material can be transformed into micro-particulate fibres by inducing precipitation of a wax solution via solvent change under shear. For instance, the food-grade waxy material is dissolved in high concentration in ethanol and a small amount of this solution is added to a viscous liquid medium and subjected to shearing. This procedure results in the emulsification of the wax solution in the viscous medium and shear driven elongation of the emulsion droplets. Successively, the wax solidifies into rod-like particles due to the escape of ethanol into the continuous liquid medium, which is assisted by the fact that ethanol is soluble in the liquid medium, while the waxy material is not or poorly soluble therein. After the fibres have been formed they can be extracted and purified by using the natural buoyancy of the wax. In order to facilitate this process the viscosity of continuous liquid phase should be decreased. The inclusion of water effectively thins the solution so that the rods will rise much quicker and a clear separation is seen between the rods and most of the solution. The liquid phase can then be taken and replaced by water several times in order to remove all solvents other than water. Due the fact that waxy materials have a contact angle at the air-water interface between 60° and 120°, the micro particulate fibres have affinity for adsorbing at the air/water surface.

The contact angle can be measured using the gel-trapping technique as described by technique as described by Paunov (Langmuir, 2003, 19, 7970-7976) or alternatively by using commercial contact angle measurement apparatus, such as the Dataphysics OCA20.

The parameters that affect the formation of the waxy fibres, are a.o. the viscosity and the composition of continuous liquid phase, the shear rate, the initial droplet size, the wax concentration into ethanol solution and the total solution volume. Of these, the parameters with noticeable affects were changes to the stirring media and to the concentration of wax in ethanol. Changes to the standard solvent ratio resulted in greater or less shear which had a limited effect on the size of the rods produced. A larger influence is held by the type of solvent used. The inclusion of a small amount of ethanol to the viscous stirring media resulted in shorter but better defined micro rods with much lower flaking. It is thought that the inclusion of ethanol in the stirring media may slow the rate of precipitation of waxy material resulting in smaller micro emulsion droplets, thus giving shorter micro rods. For the influence of the various parameters that affect the formation of the waxy fibres, reference is made to WO 2006/007393 A1 (North Carolina State University).

A third element of the compositions is the presence of a vegetable oil. The oil content of the composition ranges from 1 to 40% by weight, based on the weight of the total composition. Preferably the composition comprises from 1 to 15% by weight of a vegetable oil, based on the weight of the total composition. In another preferred composition, the composition comprises from 15 to 40% by weight of a vegetable oil, based on the weight of the total composition. Other preferred oil contents of the composition are 1 to 25% by weight, or 5 to 15% by weight, or 15 to 35% by weight, or 15 to 30% by weight, or 15 to 25% by weight, based on the weight of the total composition. The presence of a vegetable oil is important to guarantee the quality of the food product, such as colour and consistency, and also other sensoric properties and flavour release. The vegetable oil can be selected from the group, consisting of sunflower oil, high oleic sunflower oil, safflower oil, high oleic safflower oil, soybean oil, maize oil, cotton seed oil, arachidic oil, olein-fractions of natural oils, such as palm oil olein, MCT - oils. Preferred vegetable oils are palm oil, maize oil or olive oil. The oil displays a solid fat content (NMR-pulse, not-stab.) of less than 10 % at 20°C. The above compositions are all free of trans fatty acids, or nearly free of trans fatty acids.

The compositions have a pH of 2.0 to 4.0, preferably 3.0 to 4.0, preferably 2.5 to 4.0, preferably 2.5 to 3.8, preferably 3.2 to 3.8. The pH can be adjusted using any suitable food-grade acid, preferably selected from the group consisting of citric acid, acetic acid, lactic acid, malic acid and mixtures thereof. Another preferred acid is gluconic acid. The source of the acid is preferably natural, e.g. vinegar, lemon or lime juice, preferably the acid is obtained by a fermentation process. The pKa value of the acid preferably is lower than 5, more preferred lower than 4.8.

Preferably, the compositions are essentially free from preservatives. Preservatives in the context of the present invention are compounds which can be regarded to be artificial or non-natural by many consumers. Examples of these are compounds that are qualified in Europe as food additives that have an e-number. Nonlimiting examples of these are the compounds classified as preservatives and having the e-numbers:

E200 Sorbic acid; E202 Potassium sorbate; E203 Calcium sorbate; E210 Benzoic acid; E211 Sodium benzoate; E212 Potassium benzoate; E213 Calcium benzoate; E214 Ethyl p-hydroxybenzoate; E215 Sodium ethyl p-hydroxybenzoate; E216 Propyl p-hydroxybenzoate; E217 Sodium propyl p-hydroxybenzoate; E218 Methyl p-hydroxybenzoate; E219 Sodium methyl p-hydroxybenzoate; E220 Sulphur dioxide; E221 Sodium sulphite; E222 Sodium hydrogen sulphite; E223 Sodium metabisulphite; E224 Potassium metabisulphite; E226 Calcium sulphite; E227 Calcium hydrogen sulphite; E228 Potassium hydrogen sulphite; E230 Biphenyl, diphenyl; E231 Orthophenyl phenol; E232 Sodium orthophenyl phenol; E234 Nisin; E235 Natamycin; E239 Hexamethylene tetramine; E242 Dimethyl dicarbonate; E249 Potassium nitrite; E250 Sodium nitrite; E251 Sodium nitrate; E252 Potassium nitrate.

Nevertheless, in spite of many consumers regarding preservatives as non-natural compounds, these compounds may be natural compounds.

The compositions preferably further contain 1 to 10% by weight of an edible salt, preferably from 3 to 10%, more preferably from 3 to 9%. The most preferred edible salt is NaCl. The water content of the composition is preferably in general between 30 and 60% of the total composition.

Preferably, the compositions further contain from 1 to 10%, preferably 3 to 7% of sugar.

The present invention concerns a process for the preparation of the water-continuous herbs, vegetables, and/or spices composition

This process comprises the following steps:

(i) mixing water, the food-grade acid such as vinegar, herbs, spices and/or vegetables together in a high shear mixer, which also has a mincing/ chopping or milling function, as known from any kind of puree or pulp preparation,

(ii) adding all remaining ingredients and continuing homogenisation,

(iii) filling the obtained product into a container, preferably under aseptic conditions, <u>and wherein the temperature does not exceed 50°C.</u>

If necessary the oil is heated slightly, for example to 25-30°C before addition.

The fibres may be added in the first step to get even improved dispersion.

The water-continuous herbs, vegetables, and/or spices composition are preferably applied as deep-frozen products.

The spices are applied as freeze-dried or dry, preferably finely ground products as normally used in the kitchen area. It was found, that the best product quality was obtained, if the temperature of the mixing process does not exceed 50°C, preferably does not exceed 45°C, preferably does not exceed 40°C, preferably not exceeds 30°C.

The mixing according to this process can be performed by any conventional high shear mixing technique, e.g. a Moltomat, an Unimix, vertical cutter mixers, colloid mill, etc. This equipment applies high shear or high energy intensity to the material which activates the fibres and could be a

- high shear mixer being equipped with a rotor stator type of disperser (homogeniser) either internally in a batch or vessel set-up or within an external circulation in a bypath stream or
- a cutting device using for example rotating knifes e.g. a meat cutter or cutting systems as used in the puree and pulp preparation e.g. an Urschel Comitrol type of equipment.

The temperature of the herbs, vegetables, and/or spices during the entire cycle from harvest until production of the composition remains below 50°C, preferably does not exceed 45°C, preferably does not exceed 40°C, preferably not exceeds 30°C.

The composition preferably is packed in a closed container which is impermeable for oxygen and/or UV light. This container can be stored at a temperature between 1°C and 35°C, preferably between 4°C and 35°C, preferably between 10°C and 30°C, most preferred at ambient temperature.

Due to the low temperature processing, the quality of the composition remains high, with only limited loss of colour, taste, flavour and other properties of the composition as compared to compositions which have undergone high temperature processing. Nevertheless, in spite of the relatively low temperature during the preparation process, the microbiological quality of the composition is retained at a high and safe level, due to using a combination of techniques to preserve the quality of the product. In spite of the composition containing finely ground herbs, vegetables, and/or spices, enzymes which may be released during the preparation process do not negatively deteriorate the quality of the composition.

The combination of acidity of the product, presence of insoluble fibres, low temperature processing, optional presence of salts, preferred packaging, and low temperature processing, and in spite of the absence of preservatives which can be regarded by the consumer as artificial or non-natural, the keepability and microbiological safety of the composition is very good, while retaining a high product quality as perceived by the cook and high ability to give taste and flavour to various dishes.

## EXAMPLES

The invention will now be further illustrated by means of the following examples.

## Example 1

Based on the composition below, following process steps were carried out:

a) water, vinegar 12%, frozen basil were filled into an Unimix homogenizer and were processed for 5 minutes at speed level 3.

b) after the first step, salt, sugar, maltodextrine, olive oil and citrus fibres were added and processed for 5 minutes at speed level 3, and then 15 min at speed level 2.

c) the final product was pumped to the filling line and filled in plastic jars to give a Basil containing pureed herbs/spices composition.

The temperature during the process was room temperature, about 20 to 22°C.

| Composition | 1A | 1B |
|---|---|---|
|  | Wt% | Wt% |
| Water | 39.40% | 40.96 % |
| Basil premium 6 mm frozen | 14.00% | 14.55 % |
| Maltodextrine | 13.60% | 14.14 % |
| Salt non iodized | 9.20% | 9.56 % |
| Olive Oil Extra Virgin-Inv. | 8.40% | 8.73 % |
| Vinegar 12 % | 6.20% | 6.44 % |
| Sugar | 5.40% | 5.61 % |
| Citrus fibre Type N * | 3.80% |  |
| * citrus fibre: Herbacel Type N ex Herbafoods (Werder (Havel), Germany) | | |

The products were kept for 4 weeks to evaluate the texture stability, colour stability and taste. Storage conditions were 5°C, 20°C, 30°C and light 20°C.

It was found that composition 1A containing citrus fibres

- shows no separation of liquid
- shows no change in colour
- shows no differences in taste.

In contrast, the composition 1 B without the citrus fibres:

- shows separation of liquid directly after processing and no consistency given
- Shows big changes in colour, the green colour turns to brownish, and
- the taste was no more fresh and not typical Basil.

Composition 1A was also prepared containing 21% by weight organic palm oil, instead of 8.4% olive oil. In order to accommodate this increased amount of oil, the amount of water was reduced, and other ingredients kept constant. The colour and taste of the composition having 21% by weight of oil, was nearly the same as the puree containing 8.4% by weight oil. water reduced

A composition free from added vegetable oil was different in colour and consistency, such that the sensoric quality of the composition was not acceptable.

### Example 2

In this example, two different types of fibres were used. The following Basil containing pureed herbs/spices compositions were mixed in a homogenizer for 10 minutes, filled in plastic jars, and kept for 4 weeks to evaluate the texture stability, colour stability and taste.

| Composition | 2A | 2B |
|---|---|---|
| | Wt% | Wt% |
| Water | 39.40% | 39.40% |
| Basil premium 6 mm frozen | 14.00% | 14.00% |
| Maltodextrine | 13.60% | 13.60% |
| Salt non iodized | 9.20% | 9.20% |
| Olive Oil Extra Virgin-Inv. | 8.40% | 8.40% |
| Vinegar 12 % | 6.20% | 6.20% |
| Sugar | 5.40% | 5.40% |
| Citrus fibre Type N * | 3.80% | |
| Modified com starch | | 3.80% |
| * citrus fibre: Herbacel Type N ex Herbafoods (Werder (Havel), Germany) | | |

It was found that composition 2A containing citrus fibres

- shows no separation of liquid
- shows no change in colour
- shows no differences in taste

In contrast, the composition 2B containing modified corn starch

- was not stable at all - the liquid separated immediately, no texture
- shows big differences in colour and taste - the colour turns brownish within a few hours and the typical Basil taste vanished.

### Example 3

Various pureed herbs/spices compositions were prepared, as examples of some key recipes, showing a range of recipes. The raw materials were mixed and minced to a homogeneous puree at a temperature -10°C to 20°C, depending on the raw materials (frozen vegetables-herbs, or spices with room temperature). No pasteurisation, no sterilisation and no heating step was applied. Microbiological analyses showed that the product is ambient-sterile. The ingredient list does not contain enhancers, colorants, stabilizer or other chemical additives or E-Numbers.

**Example of formulations:**

| Ginger | Wt% |
|---|---|
| Ginger granule, IQF | 28.00% |
| Water | 27.80% |
| Maltodextrine | 13.40% |
| Salt non iodized | 9.20% |
| Palm Oil Organic | 6.80% |
| Vinegar 12 % | 6.00% |
| Sugar | 5.40% |
| Citrus fibre Type N * | 3.40% |

| Basil | Wt% |
|---|---|
| Water | 39.40% |
| Basil premium 6 mm frozen | 14.00% |
| Maltodextrine | 13.60% |
| Salt non iodized | 9.20% |
| Olive Oil Extra Virgin-Inv. | 8.40% |
| Vinegar 12 % | 6.20% |
| Sugar | 5.40% |
| Citrus fibre Type N * | 3.80% |

| Herb med | Wt% |
|---|---|
| Water | 45.00% |
| Maltodextrine | 13.60% |
| Salt non iodized | 9.20% |
| Palm Oil Organic | 7.00% |
| Vinegar 12 % | 6.20% |
| Sugar | 5.60% |
| Citrus fibre Type N * | 4.00% |
| Frozen Oregano Leaf | 3.60% |
| Thyme deep frozen | 3.50% |
| Rosemary deep frozen | 1.70% |
| Basil premium 6 mm frozen | 0.60% |

| Curry | Wt% |
|---|---|
| Water | 48.70% |
| Maltodextrine | 12.60% |
| Salt non iodized | 8.80% |

(continued)

| Curry | Wt% |
|---|---|
| Palm Oil Organic | 6.40% |
| Vinegar 12 % | 5.80% |
| Sugar | 5.20% |
| Curry Indish | 5.10% |
| Citrus fibre Type N * | 3.80% |
| Pineapple VD Powder 10% Salt | 1.90% |
| Coriander powder | 0.60% |
| Cumin Ground Steam Treated | 0.50% |
| Tumeric ground | 0.50% |
| Cayenne pepper | 0.05% |
| Cardamon powder | 0.05% |
| * citrus fibre: Herbacel Type N ex Herbafoods (Werder (Havel), Germany) | |

All the above pureed herbs/spices compositions had excellent properties such as physical stability, colour stability, taste and microbiological stability.

**Example 4**

The effect of various fibres on colour and stability of pureed basil compositions was determined. The composition and preparation method of the pureed basil composition was as indicated in example 3. Various fibre stabilisers were compared, wherein the amount of the fibre preparation added to the basil composition was always 3.8%.

The colour of the composition was determined using the Pantone Matching System. This is a colour space used in a variety of industries, primarily printing. The colour of the pureed herb compositions after production was determined by comparing the purees to the standard colours of the pantone system, and assigning to it the pantone colour code.

Also the consistency after production was measured. The results are given in the following table:

| Code | Basil puree with insoluble fibres | Pantone colour after production | Consistency |
|---|---|---|---|
| 1 | Citrus fibre Herbacel type N * | 378C | smooth solid |
| 2 | Vitacel Wheat Fibre WF 200 # | 378C | thick fluid |
| 3 | Vitacel Wheat Fibre Gel WFG HS 73 # | 378C | thick fluid |
| * citrus fibre: Herbacel Type N ex Herbafoods (Werder (Havel), Germany)<br># Vitacel wheat fibres: ex J. Rettenmaier and Söhne GmbH, Rosenberg (Germany) | | | |

The samples containing wheat fibre were somewhat softer than the one containing citrus fibres, nevertheless still acceptable.

These samples were tested on colour after 1 week storage at room temperature, and consistency after 2 days storage at room temperature. Results are given in the following table:

| Code | Basil puree with insoluble fibres | Pantone colour after 1 week | Consistency after 2 days |
|---|---|---|---|
| 1 | Citrus fibre Herbacel type N * | 581C | smooth solid |
| 2 | Vitacel Wheat Fibre WF 200 # | 581C | softer |
| 3 | Vitacel Wheat Fibre Gel WFG HS 73 # | 385C | softer |

All three samples lost a bit on green colour after 1 week, nevertheless still very acceptable. The consistency of sample 1 was constant, and samples 2 and 3 had become a bit softer, but still acceptable.

The 3 basil purees were tested in Knorr professional chicken bouillon (concentration 15 bouillon in 1 liter water), for their effect on colour and taste of the bouillon. The pureed herb compositions were added at a concentration of 5 gram puree per 100 milliliter prepared bouillon. The taste and flavour of the bouillon was tested on the intensity of basil, and also the colour of the bouillon was determined.

| Code | Basil puree with insoluble fibres | Taste and flavour in chicken bouillon | Colour Bouillon |
|---|---|---|---|
| 1 | Citrus fibre Herbacel type N * | Basil | green |
| 2 | Vitacel Wheat Fibre WF 200 # | Basil (intensive) | intensive green |
| 3 | Vitacel Wheat Fibre Gel WFG HS 73 # | Basil, bit sour | intensive green |

All three basil purees provided nice basil aroma to the bouillons, wherein there were some minor differences between the samples. The colour of the bouillon was also comparable, wherein the purees containing wheat fibres had an intense green colour.

**Example 5**

The influence of the heating temperature during preparation of a pureed herb composition on the colour of the puree was determined by measuring the colour of pureed basil compositions as function of the temperature applied during the production process. The composition of these basil compositions was the same as in example 1, sample 1A. The pureed herb compositions were prepared following the procedure in example 1, and after preparation they were heated at the indicated temperatures during 2 minutes.

The colour measurement is based on the CIE L*a*b* system. L*-value represents light (white=100) and dark (black=0).The a*-value ranges from red (+a*) to green (-a*) whereas the b*-value ranges from yellow (+b*) to blue (-b*). The equipment used was ER 50 GretagMacbeth, D65/10.

In order to determine the colour difference between two samples, a ∆E (delta E) value was determined in the following way:

$$\Delta E = \sqrt{((\Delta L^2) + (\Delta a^2) + (\Delta b^2))}$$

$$( \text{delta } E = \text{sqrt } [(\text{delta } L^2) + (\text{delta } a^2) + (\text{delta } b^2)] )$$

The following legend describes the meaning of the value of ∆E:

| ∆E | Assessment |
|---|---|
| 0.0-0.5 | No or hardly any difference |
| 0.5 -1.0 | difference perceivable for trained observer |
| 1.0- 2, 0 | perceivable colour difference |
| 2.0 - 4.0 | significant colour difference |
| 4.0 - 5.0 | significant colour difference, seldom tolerable |
| > 5.0 | difference would be regarded as another colour |

| Sample | L* | a* | b* | ∆E (compared to standard) |
|---|---|---|---|---|
| Basil Puree Standard | 33.3 | -0.7 | 34.8 | - |
| Basil Puree - heated to 40-44°C | 32.9 | 2.4 | 34.3 | 3.1 |
| Basil Puree - heated to 60-64°C | 32.5 | 2.7 | 32.7 | 4.0 |
| Basil Puree - heated to 80-84°C | 31.7 | 2.6 | 31.9 | 4.6 |

The temperature during the preparation process of the standard puree was room temperature, about 20 to 22°C. From these results follows that increasing the temperature of the composition to a temperature of 60°C leads to loss of colour, as compared to the non-heated standard. Also heating to a temperature of 40°C leads to colour change, however this colour change is still acceptable.

**Claims**

1. A process for preparing a water-continuous herbs, vegetables, and/or spices composition,
   comprising from 1 % to 60% by weight of one or more herbs, vegetables and/or spices,
   from 1 to 10% by weight of insoluble fibres, which are citrus fibres or wheat fibres,
   from 1 to 40% by weight of a vegetable oil
   and having a pH of 2.0 to 4.0,
   comprising the steps of:

   (i) mixing water, food-grade acid, herbs, spices and/or vegetables together in a high shear mixer, which also has a mincing/ chopping or milling function,
   (ii) adding all remaining ingredients and continuing homogenisation,
   (iii) filling the obtained product into a container, preferably under aseptic conditions;

   and wherein the temperature does not exceed 50°C.

2. A process according to claim 1, wherein the temperature does not exceed 40°C.

3. A process according to claim 1 or 2, wherein the composition is a pureed composition.

4. A process according to any of claims 1 to 3 , wherein the composition comprises from 1 to 15% by weight of a vegetable oil.

5. A process according to any of claims 1 to 3, wherein the composition comprises from 15 to 40% by weight of a vegetable oil.

6. A process according to any of the preceding claims, wherein the composition comprises from 5% to 40% by weight of one or more herbs, vegetables and/or spices.

7. A process according to any one of the preceding claims, wherein the composition contains a food grade acid selected from citric acid, acetic acid, lactic acid, malic acid.

8. A process according to claim 7 wherein the acid source is vinegar or lemon juice.

9. A process according to any one of the preceding claims, said composition being essentially free from preservatives.

10. A process according to any one of the preceding claims, said composition containing from 1 to 10% of an edible salt.

11. A process according to any one of the preceding claims, said composition containing from 1 to 10%, preferably 3 to 7% of sugar.

12. A process according to any one of the preceding claims, wherein the vegetable oil in the composition at least partially consists of palm oil or olive oil.

13. A process according to any one of the preceding claims, wherein the fibres in the composition have a length of 25 to about 400 microns.

**Patentansprüche**

1. Verfahren zum Herstellen einer Wasser-kontinuierlichen Zusammensetzung aus Kräutern, Gemüse und/oder Gewürzen,

die 1 bis 60 Gew.-% von einem oder mehreren Kräutern, Gemüse und/oder Gewürzen,
1 bis 10 Gew.-% unlösliche Fasern, die Zitrusfasern oder Weizenfasern sind,
1 bis 40 Gew.-% Pflanzenöl aufweist, und
einen pH-Wert von 2,0 bis 4,0 hat,
das die folgenden Schritte aufweist:

(i) Mischen von Wasser, einer Säure mit Lebensmittelqualität, Kräutern, Gewürzen und/oder Gemüse miteinander in einem Mischer mit hoher Scherwirkung, der auch eine Zerkleinerungs/Schneid- oder Mahlfunktion hat,
(ii) Zugeben aller restlichen Bestandteile und weiteres Homogenisieren,
(iii) Füllen des erhaltenen Produktes in einen Behälter, vorzugsweise unter aseptischen Bedingungen;

und wobei die Temperatur 50 °C nicht übersteigt.

2. Verfahren nach Anspruch 1,
wobei die Temperatur 40 °C nicht übersteigt.

3. Verfahren nach Anspruch 1 oder 2,
wobei die Zusammensetzung eine pürierte Zusammensetzung ist.

4. Verfahren nach einem der Ansprüche 1 bis 3,
wobei die Zusammensetzung 1 bis 15 Gew.-% Pflanzenöl aufweist.

5. Verfahren nach einem der Ansprüche 1 bis 3,
wobei die Zusammensetzung 15 bis 40 Gew.-% Pflanzenöl aufweist.

6. Verfahren nach einem der vorstehenden Ansprüche,
wobei die Zusammensetzung 5 bis 40 Gew.-% von einem oder mehreren Kräutern, Gemüse und/oder Gewürzen aufweist.

7. Verfahren nach einem der vorstehenden Ansprüche,
wobei die Zusammensetzung eine Säure mit Lebensmittelqualität enthält, die aus Zitronensäure, Essigsäure, Milchsäure und Äpfelsäure ausgewählt ist.

8. Verfahren nach Anspruch 7,
wobei die Säurequelle Essig oder Zitronensaft ist.

9. Verfahren nach einem der vorstehenden Ansprüche,
wobei die Zusammensetzung im wesentlichen frei von Konservierungsmitteln ist.

10. Verfahren nach einem der vorstehenden Ansprüche,
wobei die Zusammensetzung 1 bis 10 Gew.-% Speisesalz enthält.

11. Verfahren nach einem der vorstehenden Ansprüche,
wobei die Zusammensetzung 1 bis 10 %, vorzugsweise 3 bis 7 % Zucker enthält.

12. Verfahren nach einem der vorstehenden Ansprüche,
wobei das Pflanzenöl in der Zusammensetzung zumindest teilweise aus Palmöl oder Olivenöl besteht.

13. Verfahren nach einem der vorstehenden Ansprüche,
wobei die Fasern in der Zusammensetzung eine Länge von 25 bis etwa 400 $\mu$m aufweisen.


**Revendications**

1. Procédé de préparation d'une composition aqueuse en continu d'herbes, de légumes et/ou d'épices comprenant de 1 % à 60 % en poids d'un(e) ou plusieurs herbes, légumes et/ou épices,
de 1 à 10 % en poids de fibres insolubles qui sont des fibres d'agrumes ou des fibres de blé,
de 1 à 40 % en poids d'une huile végétale et ayant un pH de 2,0 à 4,0,

comprenant les étapes :

(i) mélanger de l'eau, un acide de qualité alimentaire, des herbes, des épices et/ou des légumes conjointement dans un mélangeur à cisaillement élevé qui a également une fonction d'éminçage/hachage ou de broyage,
(ii) ajouter tous les ingrédients restants et continuer l'homogénéisation,
(iii) verser le produit obtenu dans un conteneur, de préférence dans des conditions aseptiques ;

et dans lequel la température ne dépassant pas 50° C.

**2.** Procédé selon la revendication 1, dans lequel la température ne dépasse pas 40° C.

**3.** Procédé selon la revendication 1 ou 2, dans lequel la composition est une composition en purée.

**4.** Procédé selon l'une quelconque des revendications 1 à 3, dans lequel la composition comprend de 1 à 15 % en poids d'une huile végétale.

**5.** Procédé selon l'une quelconque des revendications 1 à 3, dans lequel la composition comprend de 15 à 40 % en poids d'une huile végétale.

**6.** Procédé selon l'une quelconque des revendications précédentes, dans lequel la composition comprend de 5 % à 40 % en poids d'un(e) ou plusieurs herbes, légumes et/ou épices.

**7.** Procédé selon l'une quelconque des revendications précédentes, dans lequel la composition contient un acide de qualité alimentaire choisi parmi l'acide citrique, l'acide acétique, l'acide lactique, l'acide malique.

**8.** Procédé selon la revendication 7, dans lequel la source d'acide est du vinaigre ou du jus de citron.

**9.** Procédé selon l'une quelconque des revendications précédentes, ladite composition étant essentiellement dépourvue de conservateurs.

**10.** Procédé selon l'une quelconque des revendications précédentes, ladite composition contenant de 1 à 10 % d'un sel comestible.

**11.** Procédé selon l'une quelconque des revendications précédentes, ladite composition contenant de 1 à 10 %, de préférence 3 à 7 % de sucre.

**12.** Procédé selon l'une quelconque des revendications précédentes, dans lequel l'huile végétale dans la composition consiste au moins partiellement en une huile de palme ou une huile d'olive.

**13.** Procédé selon l'une quelconque des revendications précédentes, dans lequel les fibres dans la composition ont une longueur de 25 à environ 400 microns.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 4572836 A
- US 20060003081 A1
- WO 2005039317 A1
- WO 9408470 A
- WO 2007092383 A2
- WO 9631126 A1
- DD 220895 A1
- GB 1570793 A
- WO 9005460 A
- US 2006115564 A
- WO 2006007393 A1

**Non-patent literature cited in the description**

- **J. de Bairacli Levy.** The Illustrated Herbal Handbook. Faber and Faber Ltd,
- The Book of Spices. Livingstone Publ. Comp, 1969, 3
- **Paunov.** *Langmuir,* 2003, vol. 19, 7970-7976